# EUROPEAN PATENT SPECIFICATION

(11) **EP 1 208 768 B1**
(45) Date of publication and mention of the grant of the patent: **27.06.2007**
(21) Application number: 01204451.7
(22) Date of filing: 19.11.2001
(51) Int. Cl.: A47B 13/02, F16B 12/44

(54) **Multi-use joint for the connection of a leg to a table surface**
Mehrzweckverbindungselement zwischen Tischplatte und Tischbein
Raccord à usages multiples entre plateau et pied de table

(30) Priority: 23.11.2000 IT MI002520
(43) Date of publication of application: 29.05.2002
(73) Proprietor: LEONARDO S.r.l., 22060 Figino Serenza, CO (IT)
(72) Inventor: Cattaneo, Carlo, 22060 Figino Serenza (IT)
(74) Representative: Martegani, Franco

(56) References cited:
- EP-A- 0 685 186
- EP-A- 0 972 466
- FR-A- 2 443 607
- US-A- 3 901 613

## Description

The present invention relates to a multi-use joint for the stable connection of a leg to a table surface, or similar element, which, in particular, can also be used as a junction plate between tables.

Tables preferably consist of several separate pieces, the surface and legs, to allow easier transportation and storage, minimizing their bulk and reducing the risk of damage.

These single components must allow rapid assembly also on the part of end-users, people who are not expert and who do not generally have specific equipment, at the same time guaranteeing firm and stable attachment over a period of time, also with the possibility of being dismantled.

The leg anchoring system should enable easy dismantling without causing the quality of the connection to deteriorate over a period of time, as a result of this operation.

A solution to this necessity consists in the use of an interposed connecting device, firmly applied to each corner of the table surface by means of screws, equipped with a cylindrical body with expandable septa on which a tubular leg is attached, as disclosed in Italian patent IT-1,028,018 and in European patent EP-0467460.

A similar solution is disclosed in EP-A-972 466.

Another strongly felt necessity in this area is the possibility of creating a table whose surface can be dismantled into distinct parts, practically and safely joined to each other, for example by means of a connecting plate.

As both of these demands relate to the assembly of tables, the use of a single connecting device capable of being adapted to both requirements, as a joint for connecting a leg to a table surface and as a junction between table surfaces, would seem most logical for making the assembly devices as uniform as possible.

An objective of the present invention is to produce a multi-use joint for connecting a leg to a table surface which optimizes the aesthetic result for both types of assembly, allowing anchorage without any initial positioning problem of the joint.

Another objective of the present invention is to put the leg hole in a position invisible to the eye, to have access to the radial expansion grain of the joint.

A further objective of the present invention is to produce a multi-use joint for connecting a leg to a table surface which guarantees a connection which can be dismantled and yet is extremely stable over a period of time.

An additional objective of the present invention is to create a joint for connecting a leg to a table surface which is particularly functional, relatively simple and economic to produce and which does not require any complex additional processing.

These objectives according to the present invention are achieved by the production of a joint for connecting a leg to a table surface as described in claim 1.

Further characteristics of the joint for connecting a leg to a table surface are illustrated in the dependent claims.

The characteristics and advantages of a joint for connecting a leg to a table surface according to the present invention are evident from the following, illustrative and non-limiting description, referring to the enclosed schematic drawings, wherein:
- figure 1 shows a perspective view of a first embodiment of a multi-use joint according to the invention;
- figures 2 and 3 show an assembled section and a plan view from above of a first possible type of application of the joint of figure 1;
- figure 4 shows a plan view from above, like figure 3, of a second possible type of application of the joint illustrated in figure 1;
- figure 5 shows a perspective view of a second embodiment of a multi-use joint according to the invention;
- figures 6 and 7 show plan views from above of two possible types of application of the joint illustrated in figure 5;
- figure 8 shows a perspective view of a third embodiment of a multi-use joint according to the invention;
- figures 9 and 10 show an assembled section and a plan view from above of a first possible type of application of the joint of figure 8;
- figure 11 shows a plan view from above of a second possible type of application of the joint illustrated in figure 8;
- figure 12 shows a perspective view of a fourth embodiment of a multi-use joint according to the invention;
- figures 13 and 14 show an assembled section and a plan view from above in which there are two possible types of application of the joint of figure 12;
- figures 15 and 16 show the use of the joint according to the invention for the application of a leg onto the corner of a table, and in correspondence with the junction between two surfaces, respectively.

With reference to the figures in general, these illustrate a multi-use joint for connecting a leg to a table surface or similar element (figure 15), which, in particular, can also be used as a junction plate between tables (figure 16).

The universal joint consists of a cylindrical expandable body or expander 11, which can be inserted into a complementary hollow end of a table leg (not shown), and an anchor plate 12. In the embodiments of the present invention described below, the expander 11 contains up to two expansion grains 13 and 14, maneuverable from outside the cylindrical body 11. Each of these is generally screwed into a threaded element, defined in more detail hereunder. As already specified, the expander 11 is joined to the anchor plate 12 which as an attaching device for anchorage by means of screws (not shown) to the surface of a table or similar element, equipped with holes 26 and 27 in suitable positions. This attaching device in the example consists of a polygonal plate in the form of a right-angle triangle.

The expander 11 and anchor plate 12 can be alternatively produced as a single metal piece, generally aluminum, by means of die casting, or as two separate components, sheared by a metal strip, for example made of simple ferrous material, which are then firmly joined together, for example by means of welding.

The expander 11, if sheared by a strip, has a slot 15 between two opposite ends of the strip, which creates the possibility of expansion. If, on the other hand, it is produced by means of die casting, the expander consists of a cylindrical body with expandable septa.

Generally speaking, in the embodiments of the present invention described below, the expander 11 contains one or two expansion grains 13, 14, maneuverable from outside the leg, which are each screwed into a threaded element or which react against a surface plate.

In all the examples, there are two access openings 16 and 17 on the body of the expander, in essentially opposite positions, for inserting the above-mentioned grains 13, 14, or an activating and anchoring element. The access openings 16, 17, each in line with a threaded element in which the grain is anchored or with a reaction element, are directed according to axes.

The above threaded elements may consist of a threaded nut, housed inside a shaped housing, created by the wall of the expander 11. Alternatively there may be two threaded holes 20 situated in portions or extensions of the expander 11 curved towards the inside of said expander.

The access openings 16, 17 can both have coinciding axes, positioned on a median axis X of the joint, or non-coinciding axes, parallel to the median axis. Alternatively, both axes may be sloping at a certain angle (α) with respect to the median axis X, so as to guarantee insertion of the tool in axis.

A description follows of the single elements, when possible using the same reference numbers.

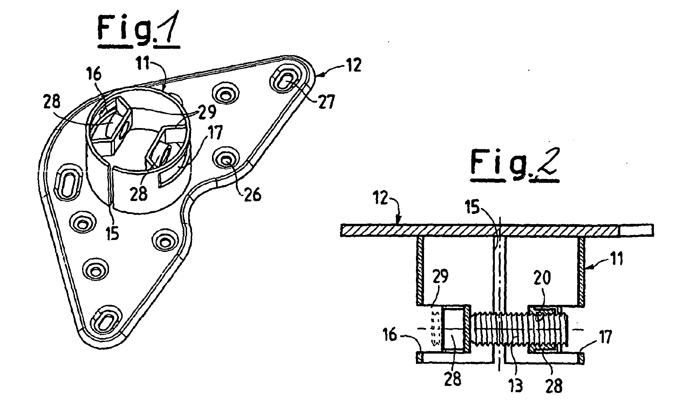

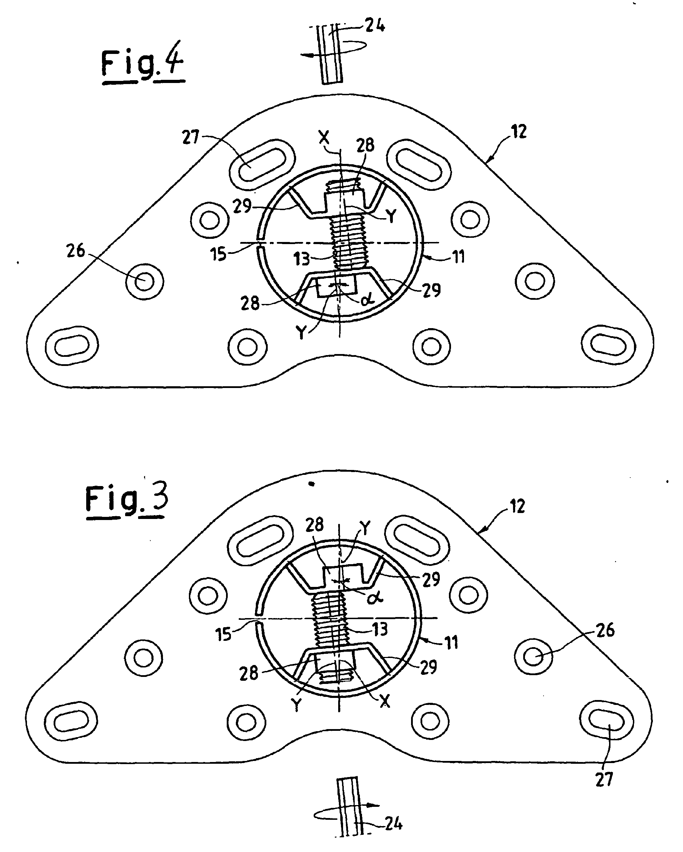

Figures 1-4 show a first embodiment in which the above housings, with relative threads, consist of two cylindrical portions 28 equipped with threaded holes 20. These portions 28 are arranged on portions of the surface 29 of the expander, curving inwards in the shape of a trapezoid forming the access openings 16, 17. The cylindrical portions 28 have slanting axes Y with respect to the median axis X of the joint (figures 3 and 4).

In this case, only one grain 13 is necessary, as shown in figures 2 and 3, which acts on the opposite portion of the surface 29, both when the access opening 17 (figures 2 and 3) and access opening 16 are used.

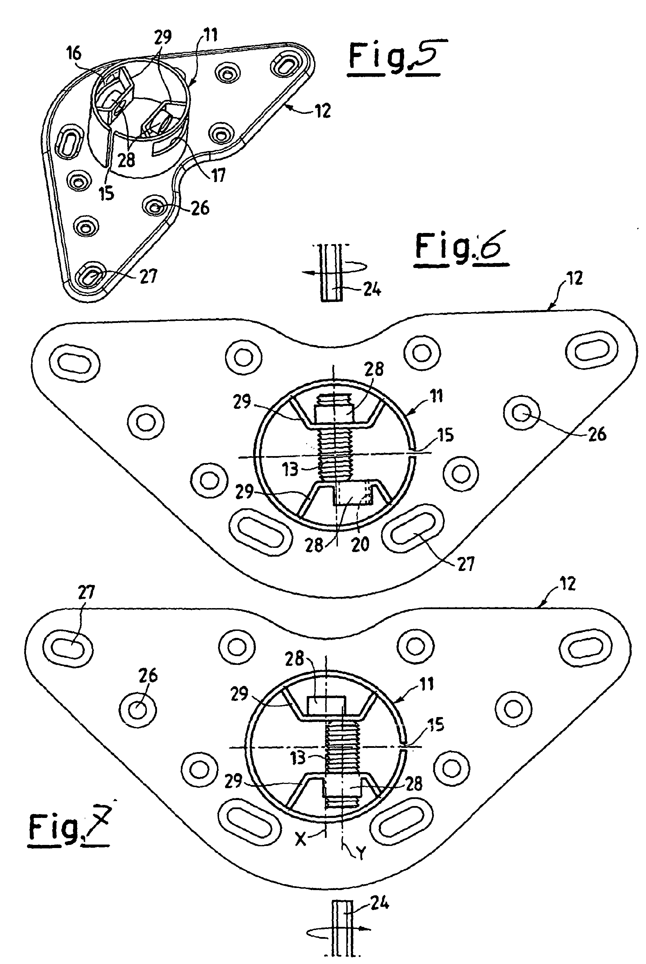

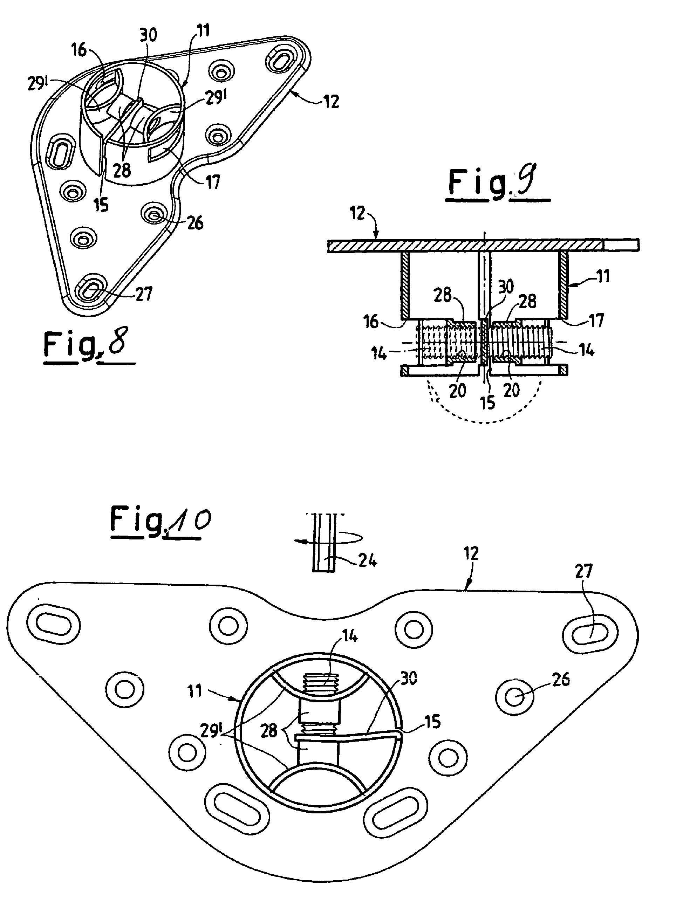

Figures 5-7 show a second embodiment, very similar to that of figures 1-4, in which the two cylindrical portions 28, equipped with threaded holes 20, have the axis Y parallel with respect to the median axis X of the joint (figures 6 and 7). The grain 13 acts as previously indicated against the opposite portion of the surface 29 on which it is situated.

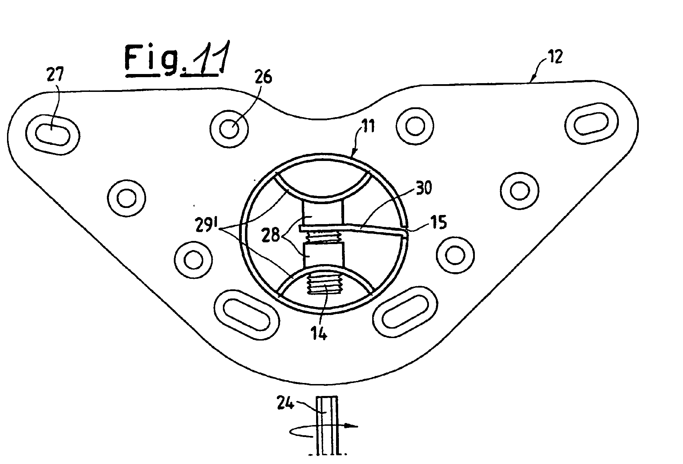

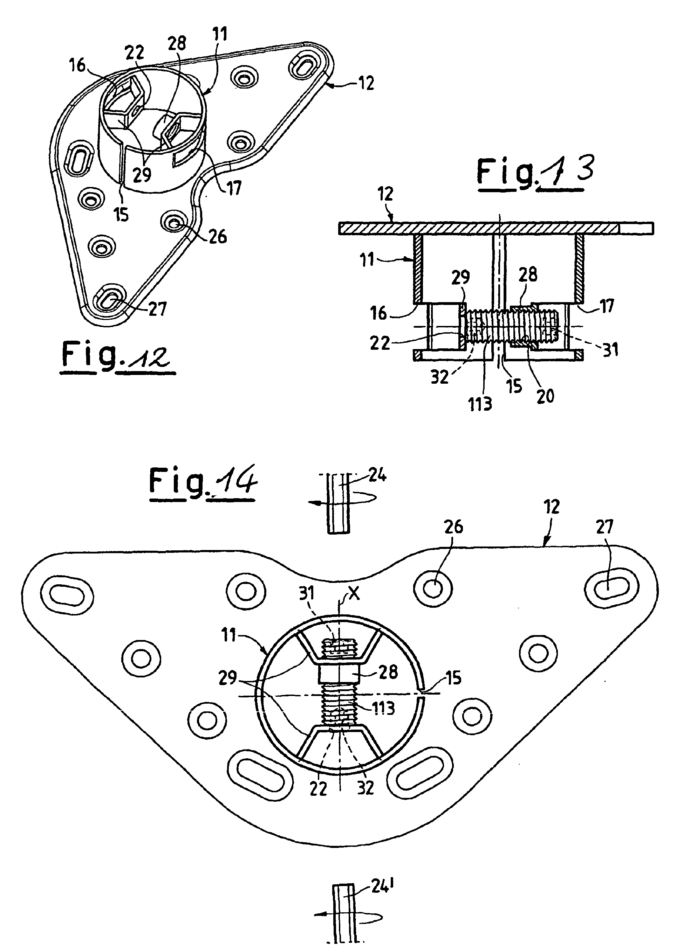

Figures 8-11 show a third embodiment in which the two cylindrical portions 28, equipped with threaded holes 20, are arranged on portions of the surface 29' of the expander, curved inwards in a semicircle, forming the access openings 16, 17. In this case, the axis of the cylindrical portions 28 perfectly coincides with the median axis X of the joint. In addition, there is a surface extension 30 situated between the two cylindrical portions 28. This extension is obtained, for example, in the forming phase of the expander 11 directly by the strip.

The presence of the surface extension 30 makes the presence of the two grains 13 and 14 useless. In fact, only one grain, for example 14, is sufficient as it acts against said surface extension 30 which in turn is positioned against the other cylindrical portion 28 deforming the expander 11; this totally regardless of whether the grain is situated in either one or the other of the cylindrical portions 28 of the joint.

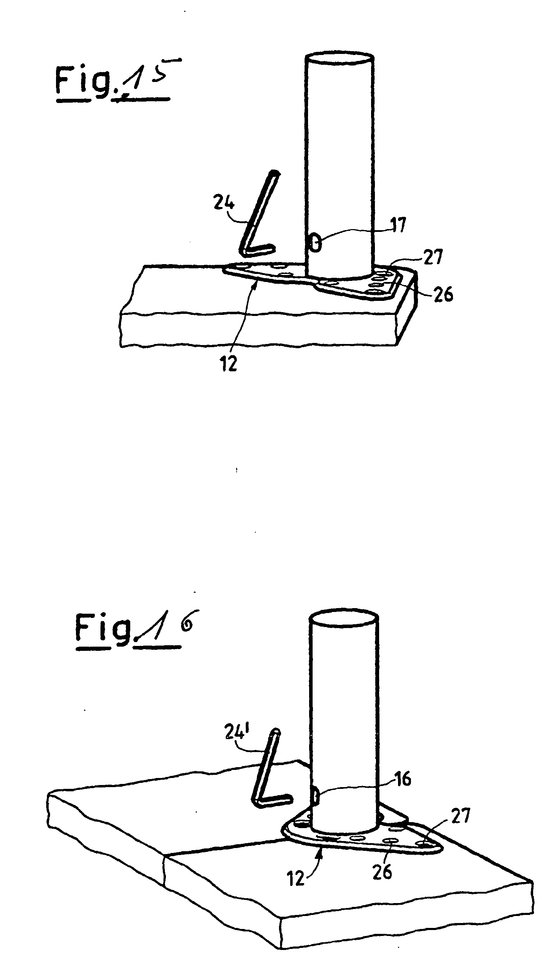

Figures 12-14 show a fourth embodiment in which there is only one cylindrical portion 28, equipped with a threaded hole 20. This portion 28 is also arranged on a portion of the surface 29 of the expander, curved inwards in the form of a trapezoid, whereas opposite this, there is a further portion of surface 29, having a through hole 22, both forming the access openings 16, 17. The cylindrical portion 28 has as its axis, the median axis X of the joint (figure 14).

In this case only one grain 113 is necessary, which has activation housings 31 and 32 at opposite ends. With the use of a tool 24 which passes into the access opening 17 and is inserted into the first housing 31, the grain 113 is activated against the last opposite portion of the surface 29, obtaining the deformation of the expander. On the contrary, with the use of the tool 24' in the second housing 32, it is possible to shift the grain 113 from the opposite access opening 16, effecting an action completely analogous to that previously described.

It can therefore be seen how extremely simple it is to arrange the joint in functioning position. This is effected by tightening at least one grain against a ledge. The ledge consists of portions of the expander itself in the case of sloping or non-coinciding axes or a surface extension joined thereto, in the case of a single axis.

The joint for connecting a leg to a table surface, object of the present invention, can also be used as a junction plate between table surfaces (figure 16).

The joint for connecting a leg to a table surface, object of the present invention, has the advantage of being able to be indifferently tightened by acting on opposite sides.

## Claims

1. A joint for connecting a leg to a table surface or similar element, which, in particular, can also be used as a junction plate between tables, consisting of an expandable body, or expander (11), which can be inserted into the complementary hollow top of said leg, at least one expansion grain (13, 14, 113) manoeuvrable from outside of said leg, and which is screwed into at least one threaded housing (18, 20), and an anchoring device (12) joined to the expander (11) for fixing the table surface thereto, said grain being tightened from the outside of the leg against a ledge surface (29, 30) consisting of a portion of said expander (11),
**characterised in that** on said expander (11) there are two access openings (16, 17), in essentially opposite positions, for the activation of at least one of said grains.

2. The joint according to claim 1, **characterized in that** said access openings (16, 17) both have a coinciding axis (X), positioned on a median axis (X) of said joint.

3. The joint according to claim 1, **characterized in that** said access openings (16, 17) have sloping axes (Y) at an angle (α) with respect to a median axis (X) of said joint.

4. The joint according to claim 1, **characterized in that** said access openings (16, 17) have an axis (Z) parallel to a median axis (X).

5. The joint according to claim 1, **characterized in that** said threaded housing (20) is situated in a cylindrical portion (28) joined to a curved portion (29, 29') of said expander (11).

6. The joint according to claim 1, **characterized in that** said threaded housing is a threaded nut housed inside a shaped housing of said expander (11).

7. The joint according to any of the previous claims, **characterized in that** said expander (11) and said anchoring device (12) are produced as two separate components and are then firmly joined together, for example by means of welding.

8. The joint according to any of the previous claims, **characterized in that** said anchoring device consists of a polygonal plate (12).

9. The joint according to claim 1, **characterized in that** said expander (11) comprises a pair of surface portions (29) curving inwards, at least one of said surface portions (29) having a cylindrical portion (28) joined thereto equipped with a threaded hole (20) for receiving said grain (13, 14, 113).

## Patentansprüche

1. Verbindungselement zum Verbinden eines Beins mit einer Tischplatte oder einem ähnlichen Element, welches im Besonderen auch als eine Verbindungsplatte zwischen Tischen verwendet werden kann, bestehend aus einem spreizbaren Körper oder Spreizer (11), der in die komplementäre hohle Oberseite des Beins eingesetzt sein kann, zumindest einer Spreiz-Wurmschraube (13, 14, 113), die von der Außenseite des Beins bewegbar ist und die in zumindest ein mit einem Gewinde versehenes Gehäuse (18, 20) schraubbar ist, und eine Verankerungseinrichtung (12), die mit dem Spreizer (11) verbunden ist, um die Tischplatte daran zu befestigen, wobei die Wurmschraube von der Außenseite des Beins gegen eine Schenkelfläche (29, 30) angezogen wird, die aus einem Abschnitt des Spreizers (11) besteht,
**dadurch gekennzeichnet, dass** es an dem Spreizer (11) zwei Zugangsöffnungen (16, 17) in im Wesentlichen gegenüberliegenden Positionen für die Aktivierung von zumindest einer der Wurmschrauben gibt.

2. Verbindungselement nach Anspruch 1, **dadurch gekennzeichnet, dass** die Zugangsöffnungen (16, 17) beide zusammenfallende Achsen (X) aufweisen, die auf einer Mittelachse (X) des Verbindungselements angeordnet sind.

3. Verbindungselement nach Anspruch 1, **dadurch gekennzeichnet, dass** die Zugangsöffnungen (16, 17) schräge Achsen (Y) unter einem Winkel (α) in Bezug auf eine Mittelachse (X) des Verbindungselements aufweisen.

4. Verbindungselement nach Anspruch 1, **dadurch gekennzeichnet, dass** die Zugangsöffnungen (16, 17) eine Achse (Z) parallel zu einer Mittelachse (X) aufweisen.

5. Verbindungselement nach Anspruch 1, **dadurch gekennzeichnet, dass** das mit einem Gewinde versehene Gehäuse (20) in einem zylindrischen Abschnitt (28) gelegen ist, der mit einem gekrümmten Abschnitt (29, 29') des Spreizers (11) verbunden ist.

6. Verbindungselement nach Anspruch 1, **dadurch gekennzeichnet, dass** das mit einem Gewinde versehene Gehäuse eine Gewindemutter ist, die in einem Formgehäuse des Spreizers (11) untergebracht ist.

7. Verbindungselement nach einem der vorhergehenden Ansprüche, **dadurch gekennzeichnet, dass** der Spreizer (11) und die Verankerungseinrichtung (12) als zwei separate Bauteile hergestellt und dann beispielsweise mittels einer Schweißung fest miteinander verbunden sind.

8. Verbindungselement nach einem der vorhergehenden Ansprüche, **dadurch gekennzeichnet, dass** die Verankerungseinrichtung aus einer polygonen Platte (12) besteht.

9. Verbindungselement nach Anspruch 1, **dadurch gekennzeichnet, dass** der Spreizer (11) ein Paar Oberflächenabschnitte (29), die nach innen gekrümmt sind, umfasst, wobei mit zumindest einem der Oberflächenabschnitte (29) ein zylindrischer Abschnitt (28) verbunden ist, welcher mit einem Gewindeloch (20) zur Aufnahme der Wurmschraube (13, 14, 113) ausgestattet ist.

## Revendications

1. Assemblage pour raccorder un pied à une surface de table ou un élément similaire, qui, en particulier, peut être également utilisée comme plaque de jonction entre des tables, comprenant un corps extensible, ou extenseur (11), qui peut être inséré dans la partie supérieure creuse complémentaire dudit pied, au moins un grain d'extension (13, 14, 113) manoeuvrable depuis l'extérieur dudit pied, et qui est vissé dans au moins un logement fileté (18, 20), et un dispositif d'ancrage (12) relié à l'extenseur (11) pour fixer la surface de table à celui-ci, ledit grain étant serré depuis l'extérieur du pied contre une surface de pièce d'appui (29, 30) constituée d'une partie dudit extenseur (11),
**caractérisé en ce qu'**il y a sur ledit extenseur (11) deux ouvertures d'accès (16, 17), en des positions essentiellement opposées, pour l'activation d'au moins l'un desdits grains.

2. Assemblage selon la revendication 1, **caractérisé en ce que** lesdites ouvertures d'accès (16, 17) ont toutes les deux un axe coïncident (X), positionné sur un axe médian (X) dudit assemblage.

3. Assemblage selon la revendication 1, **caractérisé en ce que** lesdites ouvertures d'accès (16, 17) ont des axes obliques (Y) à un angle (α) par rapport à un axe médian (X) dudit assemblage.

4. Assemblage selon la revendication 1, **caractérisé en ce que** lesdites ouvertures d'accès (16, 17) ont un axe (Z) parallèle à un axe médian (X).

5. Assemblage selon la revendication 1, **caractérisé en ce que** ledit logement fileté (20) est situé dans une partie cylindrique (28) reliée à une partie courbée (29, 29') dudit extenseur (11).

6. Assemblage selon la revendication 1, **caractérisé en ce que** ledit logement fileté est un écrou fileté, logé à l'intérieur d'un logement profilé dudit extenseur (11).

7. Assemblage selon l'une quelconque des revendications précédentes, **caractérisé en ce que** ledit extenseur (11) et ledit dispositif d'ancrage (12) sont produits en tant que deux composants séparés et sont fermement reliés l'un à l'autre, par exemple par soudage.

8. Assemblage selon l'une quelconque des revendications précédentes, **caractérisé en ce que** ledit dispositif d'ancrage est constitué d'une plaque polygonale (12).

9. Assemblage selon la revendication 1, **caractérisé en ce que** ledit extenseur (11) comprend une paire de parties de surface (29) courbées vers l'intérieur, au moins l'une desdites parties de surface (29) ayant une partie cylindrique (28) reliée à celle-ci, équipée d'un trou fileté (20) pour recevoir ledit grain (13, 14, 113).
